# EUROPEAN PATENT SPECIFICATION

(11) **EP 3 308 012 B1**
(45) Date of publication and mention of the grant of the patent: **23.04.2025**
(21) Application number: 15728537.0
(22) Date of filing: 12.06.2015
(51) Int. Cl.: F03B 17/06

(54) **DEVICE FOR GENERATING ELECTRICITY FROM A LIQUID FLOW**
VORRICHTUNG ZUR ERZEUGUNG VON ELEKTRIZITÄT AUS EINEM FLÜSSIGKEITSSTROM
DISPOSITIF POUR GÉNÉRER DE L'ÉLECTRICITÉ À PARTIR D'UN ÉCOULEMENT DE LIQUIDE

(43) Date of publication of application: 18.04.2018
(73) Proprietor: Environeers Energy GmbH, 88048 Friedrichshafen (DE)
(72) Inventor: STEMMER, Angelika, 88048 Friedrichshafen (DE); GRÜNE, Stefan, 72119 Ammerbuch (DE)
(74) Representative: Hoffmann Eitle
(86) International application number: PCT/EP2015/063166
(87) International publication number: WO 2016/198120

(56) References cited:
- EP-A1- 3 212 924
- DE-A1- 3 026 315
- GB-A- 2 241 747
- US-A- 4 618 312
- US-A1- 2013 333 370

## Description

### Technical field

The present invention relates to a device for generating electricity from a liquid flow. The device may also be referred to as a flow converter and may particularly be used in a hydroelectric power plant, for example a river power plant, a tidal power plant or a storage power plant. More particularly, the present invention concerns a flow converter having a rotor rotatable about an axis of rotation substantially transversely particularly perpendicular to the flow of liquid and completely immersed in the liquid. The rotor preferably has a plurality of vanes extending parallel to the axis of rotation and fixed to the rotor for common rotation with the rotor, each vane being pivotable about a pivot axis parallel to the axis of rotation within a predetermined limited angular range.

### Background

Such a flow converter is known in the art and for example disclosed in WO 2013/026637 A1. Further flow converters of this kind are known from US 2010/0096856 A1 and US 6,109,863 B.

These flow converters each define a flow channel into which the liquid flow is introduced so as to be flown, in a top view, against one half of the rotor so as to induce rotation of the rotor. The pivotable vanes of all these flow converters are passively self-aligning to the flow of liquid upon rotation of the rotor. In particular, the vanes located in the driven half of the rotor against which the liquid is flown pivot about the pivot axis being limited by abutment at a limit stop so that the liquid flow impacts on a large surface of the vanes resulting in rotation of the rotor. Upon further rotation of the rotor, the vanes being located in the non-driven half of the rotor should only provide for a little impact surface, because any impact of the liquid flow on these vanes would counteract the rotation. Hence, the vanes again pivot about the pivot axis so as to align the large surfaces with the liquid flow.

This aspect of the prior art improves efficiency of the flow converter but bears certain risks and disadvantages with respect to reliability, because the vanes repeatedly hit the limit stop with increased wear and, therefore, requiring short maintenance intervals involving higher maintenance costs.

To that extent, even further flow converters are known from US 2013 333,370 A1 forming the basis for the preamble of claim 1 and GB 2 241 747 A.

### Summary of invention

Accordingly, it is the object of the present invention to provide a device for generating electricity from a liquid flow as described in the introductory portion being more reliable enabling shorter maintenance intervals at lower costs.

This object is according to one aspect solved by the features defined in claim 1. Embodiments of the invention are named in the dependent claims.

According to another aspect, this object is solved by actively pivoting the vanes about the pivot axes rather than passively as suggested in the prior art. This may preferably be achieved by a mechanical mechanism transmitting the rotation of the rotor to the vanes thereby pivoting the vanes about the pivot axes depending on the rotational position of the rotor. The mechanical mechanism may comprise a cam mechanism, a link mechanism or a combination thereof. Alternatively, one may force the vanes in one rotational direction by urging the vane about the pivot axis in one direction. This may be achieved by providing an elastic element, particularly a spring (for example a torsion spring or a tension spring).

According to an aspect, the device for generating electricity from a liquid flow comprises a rotor and a plurality of vanes. The rotor is preferably contained in housing and accommodated to be rotatable about an axis of rotation. The vanes are disposed in a radial and/or circumferential direction of the rotor and fixed to the rotor for common rotation with the rotor. Further, the vanes are each pivotable about a pivot axis parallel to the axis of rotation within a predetermined limited angular range. To limit the angular range, a limit stop is provided at which the vane abuts in one end position. If both positions are to be restricted, two limit stops may be provided at the opposite end positions of the angular range. Preferably each vane pivots (reciprocates) in opposite directions during rotation of the rotor, whereas the rotor rotates in only one direction. In order to have a balanced distribution of forces it is preferable that the pivot axes are equally spaced about a circumference of the rotor with the axis of rotation of rotor as a center. More, the device may preferably be configured to be completely immersed in the liquid during operation. In one embodiment, the axis of rotation of the rotor is vertically oriented during use. The housing may further comprise an inlet path for channeling the liquid flow relative to the axis of rotation and flow the liquid flow against one half (driven half) of the rotor whereas no liquid flow is flown against the opposite half (non-driven half) of the rotor relative to the axis of rotation. Thereby, the liquid flow is flown against the driven side of the rotor, that is that side of the rotor at which the direction of the liquid flow corresponds to the rotational direction of the rotor whereas a liquid flow opposite to the rotational direction of the rotor onto the vanes is prevented at the opposite side. Accordingly, the force applied by the liquid flow onto the vanes in the non-driven half counteracting the rotation is reduced and the resistance of the rotor is merely produced by the rotational movement of the vanes through the liquid, whereby the efficiency is improved. This effect may be dispensed if the vanes are pivotable about a pivot axis because even if the liquid flow is flown against the non-driven half, the surfaces of the vanes hit by the liquid flow are reduced if the vanes pivot so that there leading edge faces the liquid flow. Yet, it is preferred that both of the above features are combined to even further increase efficiency, because the latter also serves to reduce the resistance caused by the rotational movement of the vanes through the liquid.

To improve the above device in regard of reliability and to shorten the length of the maintenance interval, it is suggested to force the vanes into at least one rotational direction about the pivot axes, respectively. Thereby, the vanes are actively controlled preventing repeated high impacts on the vanes. Accordingly, wear of the vanes and, therefore, length of maintenance intervals and cost of maintenance may be reduced. In addition the movement of the vanes about the pivot axis being controlled is more reliable and independent from turbulences in the liquid flow. Also fluttering of the vanes may be prevented.

According to one embodiment, an actuator may be provided, which is driven upon or by the rotation of the rotor and configured to transmit the rotation of the rotor (driving force) to the vane, whereby the vane is forced to pivot about the pivot axis. Preferably, the actuator is configured to transmit the rotation of the rotor to the vane in both rotational directions of the vane. Accordingly, the vane may pivot about the pivot axis in opposite directions and depending on the rotational position of the rotor. Preferably, the actuator is a mechanism for physically or mechanically transmitting the rotation of the rotor to the vanes, thereby providing a simple and less cost intensive mechanism at the same time providing for ease of maintenance.

In order to provide for a balanced distribution of forces introduced into the vanes for rotation thereof about the pivot axes, it may be preferred to have two of said actuators, a first actuator at a first end of the vane in an axial direction parallel to the axis of rotation and a second actuator at a second end of the vane in an axial direction parallel to the axis of rotation opposite to the first end. Accordingly, the rotation of the vane about the pivot axis may be introduced at opposite ends with equal forces so that tilting of the vane may be prevented and, hence, larger tolerances may be used during production.

A very reliable mechanism requiring little maintenance is provided if the actuator comprises a cam follower moving along a cam surface upon rotation of the rotor. Thereby a mechanism similar to a camshaft can be used, which has been proven as very reliable. In this context, however, it is preferred that the camshaft is fixed to the housing, that is does not rotate together with voters. As a consequence, the cam followers move along the surface of the camshaft rather than vice versa. In that the distance of the cam follower to the axis of rotation is changed along the movement on the cam surface (by the cam surface), the vane may be forced to pivot about the pivot axis. According to an embodiment, the cam follower may be urged towards the cam surface by an elastic element, particularly a spring, even more particularly a torsion spring. Thereby, secure contact of the cam follower with the cam surface may be secured.

In order to ensure a secure guidance of the cam follower on the cam surface, it may be preferred to use a slotted guide as a cam surface. This also provides for a simple solution to enable rotational movement of the vane about the pivot axis in opposite directions as the cam follower may be forced away from the center axis by a cam surface located closer to the center axis (inner cam surface) and towards the center axis by a cam surface located further away from the center axis (outer cam surface). Alternatively to or in addition to the slotted guide, the cam follower or - if the cam follower is fixed to the vane - the vane itself may be urged by an elastic element into one direction relative to the rotational direction of the rotor to ensure contact of the cam follower with the cam surface and or to move the vane in opposite directions. For this purpose, an elastic element such as a tension spring or a torsion spring may be used

In order to enable a smooth and reliable movement of the cam follower along the cam surface preferably with low friction, the cam follower may be a wheel rotatable about an axis parallel to the axis of rotation. The wheel runs along the cam surface rotating on the cam surface whereby low friction is obtained and a play between the cam follower and the cam surface may be reduced to a minimum. Further and if the wheel has an elastic running surface, play may even be avoided completely and a secure contact of the wheel against the cam surface be ensured.

According to one embodiment, the cam surface extends continuously about a circumference of the rotor with the distance between the cam surface and the axis of rotation changing along the circumference. As a result, continuous contact of the cam follower with the cam surface may be achieved preventing engagement and disengagement of the cam follower with the cam surface. Accordingly, reliability can be further enhanced.

The cam surface is preferably fixed. In other words, the rotor rotates relative to the cam surface or to put it differently the cam surface does not rotate together with the rotor. Hence, the cam follower which rotates together with the rotor as being for example part of the vane (the vanes rotate together with the rotor) moves along the cam surface so that even though the cam surface is fixed it has a function comparable to a common camshaft. In one embodiment, the cam surface may be fixed relative to the housing containing the rotor.

According to an embodiment the actuator acts as a lever arm wherein one end of the lever arm is connected to the vane and the opposite end is driven. If a driving force is applied to the opposite end, the lever arm rotates about the pivot axis of the vane, because of being connected at the opposite end to the vane, resulting in the pivoting movement of the vane. In this context, the actuator may be a lever arm or act as a lever arm. An example for the latter is a disk with its rotational center being preferably concentric with the pivot axis and the driving force being applied to the disc at an eccentric position. According to a preferred embodiment, the driving force is applied to the lever arm via the above-described cam follower. In other words, the cam surface acts on the cam follower upon rotation of the rotor and thereby drives the opposite end of the lever arm resulting in a pivoting movement of the vane.

Under certain conditions, it may be preferred that the speed of rotation of the rotor is converted to a higher or lower speed of the pivoting movement of the vanes. To obtain such a conversion with a simple construction, it may be preferred that each vane comprises a transmission comprising the above-described actuator, wherein the transmission provides for the transmission ratio.

According to one embodiment, the transmission comprises a first gear and a second gear. The first gear is mounted at one end of the vane in a direction parallel to the axis of rotation. The first gear is preferably disposed coaxial to the pivot axis. Also two first gears may be provided which are then provided at opposite ends of the vane to provide a balanced force distribution as described above. If two first gears are provided it is also preferred that two second gears are provided. The actuator described above is preferably the second gear. As a consequence, the second gear is driven by the rotation of the rotor and preferably has the cam follower being eccentrically disposed on the second gear. Upon rotation of the second gear, the first gear is rotated. One or more gears may be provided between the first and second gear. According to one embodiment however, the first gear and the second gear directly mesh. The first and second gears are preferably rotatable relative to the rotor. If the second gear has the cam follower, the cam follower moves along the cam surface and thereby rotates the second gear. This rotation is transferred is a directly or via other gears to the first gear, thereby rotating the vanes. As a result, a very simple transmission with low maintenance being required is achieved.

According to an aspect, the vanes are urged into one rotational direction by an elastic element. For example, a tension spring or a torsion spring may be used for this purpose. As previously described, the elastic element may alternatively or additionally be used to act on the vanes or the cam follower in order to secure a contact between the cam follower and the cam surface during rotation of the rotor.

Another problem concerning the application in running waters particularly rivers is that the flow rate of the liquid flow is under certain circumstances not sufficient to achieve an appropriate efficiency of the device. Further, the flow rate of the liquid in the river may not be constant and may necessitate adaption during operation.

In order to solve this problem it is suggested to provide a device for generating electricity comprising two or more (particularly an even number of rotors) and more particularly a device as described in WO 2013/026637 A1 or as described above. The device is arranged between two floating bodies each having a curved airfoil surface facing the device, the airfoil surfaces forming a flow channel to be passed by the liquid flow.

In a particular embodiment, the rotor of the device is rotatable about a vertical axis meaning that the axis of rotation is substantially parallel to the surfaces of the airfoils facing towards the device. The two or more rotors are preferably arranged so that the axes of rotation of the rotors are parallel. In a particular embodiment, the rotor has a plurality of vanes equally spaced about the circumference of the rotor. Further, the device is preferably mounted so that the rotor of the device is completely immersed in the liquid.

Furthermore, it may be preferred that one or both surfaces of the airfoils facing towards the device are adjustable so as to change an angle of the surface relative to the flow direction of the liquid flow. For this purpose a control may be provided to enable adjustment during operation. Alternatively, the adjustment may be achieved by mechanical means at the site of the system by an installer of the system without adjustability during operation. The adjustability enables to adapt the inlet of the channel formed by the airfoils to the speed of the liquid flow to achieve the required flow rate of the liquid flow to achieve a high efficiency. In this context it has been found that an angle between 10° and 20°, preferably between 12° and 17° and most preferred 15° of one surface of the airfoil relative to the flow direction of the liquid flow or the opposite air foil is advantageous to achieve an appropriate acceleration of the flow rate of the liquid flow. By the use of the above-described floating bodies with the airfoil an acceleration of twice the original speed of the running water can be obtained. This is particularly assisted in that under pressure is created at the outlet of the channel formed between the surfaces of the airfoils at the downstream position of the device whereby more liquid is sucked into the inlet formed between the surfaces of the airfoils at an upstream position of the device.

According to one embodiment, three floating bodies are provided wherein a first device for generating electricity from a liquid flow is disposed between an intermediate floating body and a first outer floating body and a second device for generating electricity from a liquid flow is disposed between the intermediate floating body and a second floating body opposite to the first floating body relative to the intermediate floating body, whereby a trimaran is formed.

It may also be advantageous if the floating bodies are movable relative to each other not only for adjustment of their inclination relative to each other as described above and to adjust to the intended liquid flow rate but also to close an inlet at an upstream side between the facing airfoil surfaces of the floating bodies to prevent damaging of the device/-s in case of for example floods in which the liquid flow rate of the running water is increased and a plurality of foreign matter may be expected to enter the inlet.

The later aspect described above may be implemented even independently from the pivotability of the vanes as described in claim 1. According to an aspect, a device for generating electricity from a liquid flow is suggested comprising at least one rotor being rotatable about an axis of rotation and having a plurality of vanes spaced about the circumference of the rotor, and at least two floating bodies, wherein the rotor is rotatably fixed to the floating bodies so as to be (preferably completely) immersed in the liquid, the floating bodies each having an airfoil surface facing each other and the rotor, the airfoil surfaces forming a channel having an inlet at an upstream position of the rotor and an outlet at a downstream position of the rotor, whereby the liquid flow rate (speed) of the liquid passing the rotor may be adjusted.

According to an embodiment, the floating bodies are adjustable relative to each other with respect to the inclination of the airfoil surface/-s relative to the flow direction of the liquid flow and/or to each other. Thereby, one and the same system can be used for different applications with the ability to adjust to the circumstances. Even further, it may be conceivable to construct the floating bodies so as to be movable relative to each other between an operating position and a non-operating position, wherein the inlet formed between the facing airfoils surfaces is closed in the non-operating position. This aspect is also described in more detail in the particular embodiment below.

Further features, embodiments and advantages of the invention are described in the following detailed description referring to the accompanying drawings.

### Brief description of drawings

Figure 1 shows a cross-sectional plan view of a flow converter;
Figure 2 shows a partial perspective view of a rotor of a flow converter according to figure 1 implementing a cam surface and a cam follower for pivoting the vanes depending on the rotational position of the rotor; and
Figure 3 shows a plan view of the cam mechanism shown in figure 2;
Figure 4 shows a partial perspective view of another rotor of a flow converter according to another aspect using a transmission for pivoting the vanes depending on the rotational position of the rotor;
Figure 5 shows a cross-sectional plan view of the transmission of figure 4;
Figure 6 shows a perspective view of an even further rotor of a flow converter not forming part of the invention in which the vanes are urged into one rotational direction about the pivot axis by a spring; and
Figure 7 shows another aspect in perspective in which an application using floating bodies is illustrated;
Figure 8 shows a perspective of the aspect shown in figure 7 towards the inlet between the floating bodies; and
Figure 9 shows a plan view of the aspects in figures 7 and 8 in a simulation explaining the change of velocity of the liquid due to the airfoils of the floating bodies.

### Description of particular embodiments

In the following description, the same or similar parts throughout the different embodiments are referred to by the same reference numerals and a repeated description of these elements is omitted.

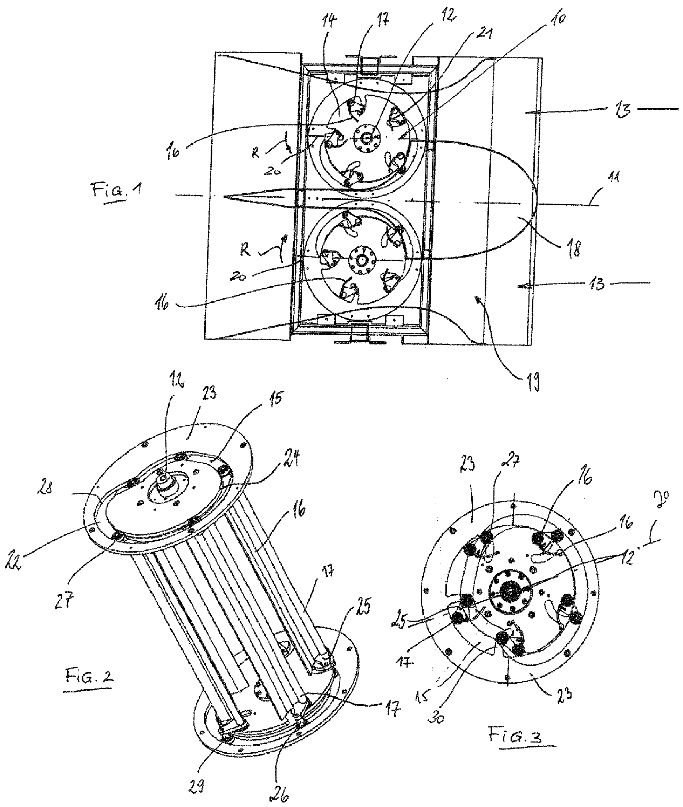

Figure 1 shows a cross sectional view of a flow converter according to a first embodiment. The flow converter comprises two rotors 10 and has a symmetric configuration in figure 1 with a longitudinal line of symmetry 11.

The rotor 10 is rotatable about an axis of rotation 12. The axis of rotation 12 in the present embodiment is oriented perpendicular to the liquid flow indicated by the arrow 13. In a particular embodiment, the flow converter is completely immersed in liquid, for example a river with the axis of rotation 12 being vertically oriented.

The rotor 10 further comprises a bottom plate 14 and a top plate 15 (see figure 2). A plurality of vanes 16 are fixed to the rotor 10 between the top plate 14 and the bottom plate 15. Each of the vanes 16 is fixed to the plates 14, 15 so as to be pivotable about a pivot axis 17 in a limited angular range. The vanes 16 are equally spaced about the circumference of the rotor and equally distanced in the circumferential direction as is visible from the figures 1 and 3. The pivoting movement of the vanes 16 will be described in more detail below.

The rotors 10 are provided in a housing 18 and rotatable relative thereto. The housing 18 has an inlet path 19 for channeling the liquid flowing in the direction 13 into the flow converter, particularly the inlet path 19. The construction of the housing 18 is selected so that the liquid channeled by the inlet path 19 is flown against only one half, namely the driven half of the rotor 10. As best visible from figure 1 the driven half of the lower rotor 10 is the lower half and the driven half of the upper rotor is the upper half. The driven and non-driven halves are respectively separated by the dotted line 20 in figure 1. Figure 1 further indicates (see arrows R) that the two rotors rotate in opposite directions. In particular, the upper rotor 10 rotates counterclockwise and the lower rotor 10 rotates clockwise.

It is also apparent from figure 1 that the vanes 16 are oriented in the driven half with their opposite faces 21, extending from a leading edge to a trailing edge, facing the liquid flow 13 and being as perpendicular thereto as possible so that the liquid is flown against these faces 21 thereby driving the rotor 10 in the rotational direction R. To the contrary the faces 21 in the non-driven half of the rotor 10 are oriented with their faces 21 substantially aligned with the flow direction of the liquid so that the liquid is not flown as much against the faces 21 as in the driven half of the rotor 10 thereby reducing both the resistance of the vanes 16 rotating through the liquid and reducing the impact of the liquid flown against the vanes in the non-driven half preventing a force tending to counter rotate the rotor.

In order to force the vane 16 in one rotational direction about the pivot axis 17, in the present embodiment even a both directions, a cam mechanism is implemented.

The cam mechanism comprises a slotted guide 22 disposed in a plate 23 fixed relative to the housing 18. Accordingly, the plate 23 does not rotate together with the rotor 10, but the rotor 10 rotates relative to the plate 23 and hence the slotted guide 22. The depicted embodiment comprises a plate 23 with a slotted guide 22 at both ends of the rotor in the axial direction. The configuration of the plates 23 at both ends is identical as is the remainder of the cam mechanism so that the cam mechanism will only be described at one end. The slotted guide 22 has a cam surface 24 (inner cam surface) continuously extending about the circumference of the rotor 10 with the axis of rotation 12 as a center. The cam surface 24 has a changing distance to the axis of rotation 12 along the circumference. A further cam surface 28 (outer cam surface) is provided which runs parallel to the cam surface 24. Hence, what has been said with respect to the cam surface 24 also applies to the cam surface 28.

Each vane 16 comprises at opposite ends an actuator formed as a lever arm 25. One end of the lever arm 25 is fixed to the vanes 16. The opposite end of the lever arm 25 has a cam follower 26. The cam follower 26 comprises a rotatable wheel 27 and an axis 29 attached to the lever arm 25. The wheel 27 has an elastic surface. The diameter of the wheel 27 is adapted to the width of the slotted guide 22 with or without play so that the wheel 27 is engaged between the inner cam surface 24 and the outer cam surface 28.

In order to allow the vanes 16 to rotate about the pivot axis 17 without the cam follower 26 and particularly the axis 29 interfering with the top and bottom plate 14, 15 curved slots 30 are formed in the plates 14, 15 corresponding to each vane 16 with the pivot axis 17 as a center of the curve.

In operation, the rotor 10 together with the vanes 16 rotates. Thereby, the wheels 27 of the cam follower 26 run along the cam surfaces 24, 28 within the slotted guide 22. Because the distance of the cam surfaces 24 and 28 changes relative to the axis of rotation 12 along the circumference, the cam followers 26 are either pushed away or towards the axis of rotation. Accordingly, the vanes 16 are forced to rotate about the pivot axis 17 in the one or the other direction depending on the movement of the cam follower 26. The axis 29 of the cam follower 26 thereby may enter into the curved slots 30 to allow the pivoting movement. The above-described system is purely mechanical with simple parts so that no electronic control or electric motor is required. Still it is enabled that the vanes 16 pivot about the pivot axis 17 depending on the rotational position of the rotor so as to achieve the effect described above with respect to the orientation of the vanes 16 in the driven and non-driven half of the rotor 10.

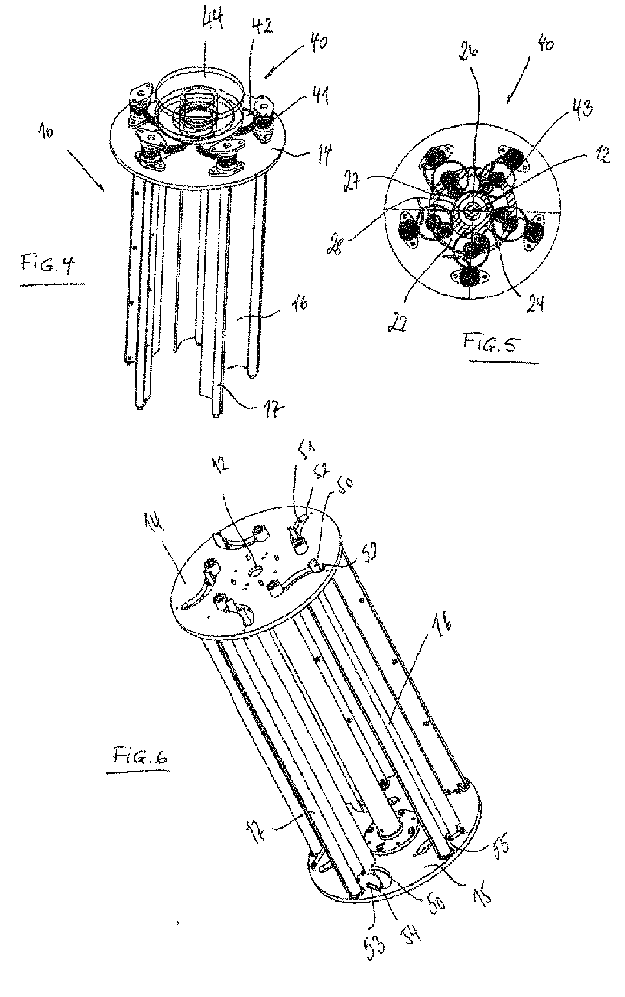

An alternative second embodiment achieving a similar effect is shown in figures 4 and 5. This embodiment implements a transmission mechanism 40, which may be disposed at opposite ends or at one end only. The benefit of this embodiment as compared to the previous embodiment is on the one hand, that the curved slots 30 in the top and bottom plates 14, 15 may be avoided and that a transmission ratio between the speed of rotation of the rotor 10 about the axis of rotation 12 and the speed of rotation of the vanes 16 about the pivot axis 17 may be achieved.

As the remainder of the second embodiment is similar to the first embodiment, a repeated description of the parts which are referred to by the same numerals is avoided.

The transmission mechanism 40 comprises first gears 41 fixed to the vanes 16 concentric to the pivot axis 17 so that rotation of the first gears 41 results in a rotation of the vanes 16 about the pivot axis 17, respectively. The gears 41 are rotatably fixed to the top plate 14 of the rotor 10. Moreover, second gears 42 are disposed meshing with the first gears 41 and rotatably fixed to the top plate 14 about an axis of rotation 43 parallel to the axis of rotation 12 and the pivot axis 17. Each of the second gears 42 has a cam follower 26 disposed concentric to the axis of rotation 43 but rotating together with the second gear 42. The cam followers 26 are constructed similar as the cam followers 26 shown in figures 2 and 3 each having an axis 29 and a wheel 27.

A support 44 is fixed relative to the housing 18. The support 44 comprises a slotted guide 22 with an inner cam surface 24 and an outer cam surface 28 similar as in the first embodiment described above. In particular, the distance between the inner cam surface 24 and the parallel outer cam surface 27 to the axis of rotation 12 changes along the circumference. Thereby the cam followers 26 or more particularly their wheels 27 are pushed toward or away from the axis of rotation 12.

During operation, the rotor 10 rotates relative to the support 44 and hence the slotted guide 22. Thereby, the wheels 27 of the cam followers 26 move along the circumference of the slotted guide 22 and run along the cam surfaces 24 and 28 as in the first embodiment. Because of the changing distance, and as previously mentioned, the wheels 27 and hence the cam follower 26 are pushed away and towards the axis of rotation 12 whereby the second gears 42 are rotated. Because the second gears 42 mesh with the first gears 41, the rotation of the second gears 42 is transferred to the first gears 41. Because the first gears 41 are connected to the pivot axis 17 of the vanes 16, the vanes 16 are rotated by the rotation of the first gears 41 to assume the corresponding rotational position about the pivot axis 17 depending on the rotational position of the rotor as described in the first embodiment above. Depending on the size of the first and second gears 42 and 41 the rotational speed of the vanes 16 about the pivot axis 17 may be adjusted as needed. In addition, weakening of the top and bottom plates 14 and 15 because of the curved slots 30 in the first embodiment may be avoided by this construction.

A third embodiment, which does not form part of the present invention and may be implemented isolated from or combined with the first and second embodiment described above, is shown in figure 6. The rotor shown in figure 6 has a plurality of vanes 16 having protrusions 50 at opposite ends engaging with a curved cutout 51, the curve having the pivot axis 17 as a center. Opposite ends 52 of the cutout 51 serve as a limit stop to limit the angular range in which the vanes 16 may pivot, Baron the protrusion 50 abut at the ends 52 of the cutout 51 in the corresponding end positions of the angular range. According to this embodiment, a tension spring 53 is provided preferably at opposite ends of the vanes 17 in the axial direction. The tension springs 53 are fixed at one end 54 to the top or bottom plate 14, 15 respectively and at the opposite end 55 to the vanes 16 at a distance to the pivot axis 17. Thereby, the tension springs 53 force (urge) the vanes 16 into one rotational direction about the pivot axis 17 (in the present embodiment in a clockwise direction). This is the most simple construction of actively controlling the movement of the vanes 16, though it is only possible to control this movement in one rotational direction. Further, the springs may also be used to urge the vanes 17 in one direction and ensure secure engagement of the cam followers with the cam surface in other embodiments. Of course different solutions to urge the cam followers 26 against the cam surface may be used instead of these springs. In this context a torsion spring may be used applying a torsion force to the vanes 16 at the pivot axis 17. Also in the first and/or second gears 42 may be urged by a torsion spring to urge the cam followers 26 into contact with the inner cam surface 24.

In view of the aforesaid, it is clear that the basic idea of the present invention may be implemented differently than described above and that combinations of the embodiments are conceivable unless they contradict each other.

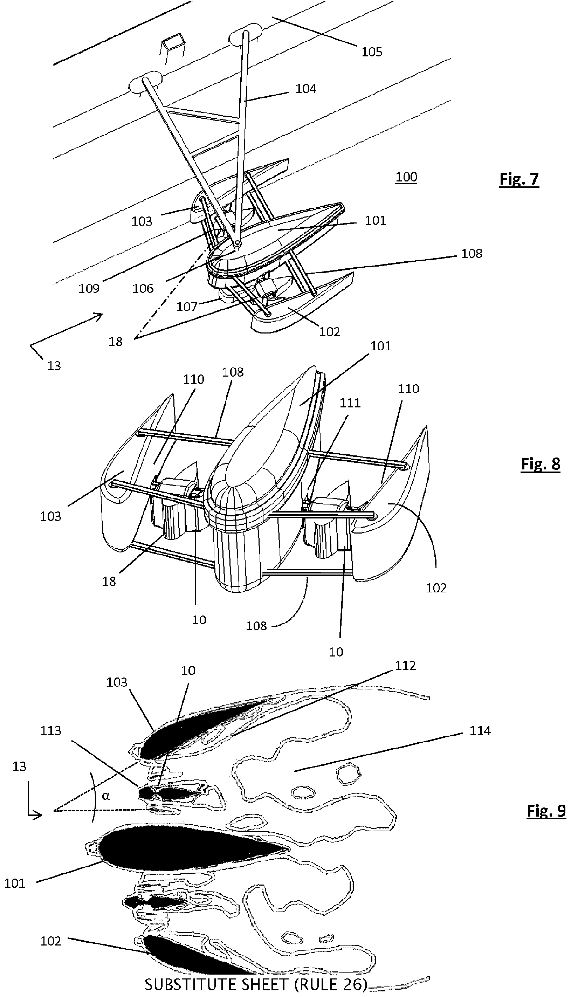

One application is for example shown in figures 6 and 7. Figure 6 embodies two of the devices described earlier wherein the housings 18 are visible in figures 6 and 7. Hence, the system disclosed in these drawings comprises four rotors 10 which may have the configuration as described above, but which may also have a different construction with for example fixed vanes or vanes which are passively pivoting about the pivot axis. The construction of the rotor is not of significance with respect to this particular application and this particular application may also be embodied with different rotors 10.

In order to immerse the devices comprising the rotors 10 in a river 100, three floating bodies 101, 102 and 103 are provided. The floating body 101 is an intermediate floating body which fixed to the waterside 105 using a crossbar 104. An axis 106 at the end of the crossbar 104 opposite to the connection to the waterside 105 is fixed to the ground of the river by a support 107. The intermediate floating body 101 is rotatably supported by the axis of 106 so as to automatically adjust to the flow direction 13 of the liquid flow in the river 100.

As will be best visible from figure 7 and 8, the longitudinal section of the floating bodies resembles an airfoil with airfoil surfaces 110 of the outer floating bodies 102, 103 facing airfoil surfaces 111 of the intermediate floating body 101. The facing surfaces 110 and 111 form a flow channel 112 having an inlet 113 upstream of the rotors 10 and an outlet 114 downstream of the rotors 10.

The outer floating bodies 102, 103 are respectively fixed to the intermediate floating body 101 by arms 108 and 109 which are at opposite ends rotatably fixed to the outer floating bodies 102 and 103 and to the intermediate floating body 101. Thereby, parallelograms are formed which by movement of the arms 108, 109 enable to adjust the inclination alpha of the airfoil surfaces 110 relative to the flow direction 13 and/or the airfoil surfaces 111 to adjust to the requirements of the river 100 particularly the flow rate of the liquid flow in the direction 13.

Accordingly, it is enabled by moving the arms 108 to change the inlet 113 and the flow channel 112 so as to create an underpressure depicted by the dark areas in figure 8 at the outlet 114 thereby suctioning the liquid into the inlet 113 with a higher flow rate (speed/velocity) depicted by the light grey areas in figure 8 near the inlet 113 than the flow rate of the river 100. As a result, the efficiency of the devices for generating electricity may be enhanced.

In addition, the arms 108 may rotate so as to bring the outer floating bodies 102, 103 in front of the intermediate floating body 101 thereby closing the inlet 113, thus bringing the entire system into a non-operating position. In this position, the rotors 10 are protected from any liquid flowing through the rotors 10 so that for example during floods the rotors may be protected from being damaged by too high flow rates of the liquid flowing in the river 100 or from foreign matters being entrained in the river during those instances.

Certainly, the above system with the floating bodies may be limited to only two floating bodies such as the floating body 101 and 103. Also, a plurality of those devices as shown in figure 6 may be disposed in a row along the waterside of the river 100.

## Claims

1. Device for generating electricity from a liquid flow, comprising:
a rotor (10) rotatable about an axis of rotation (12);
a plurality of vanes (16) extending parallel to the axis of rotation (12) and fixed to the rotor for common rotation with the rotor, each vane (16) being pivotable about a pivot axis (17) parallel to the axis of rotation (12) within a predetermined limited angular range, wherein a limit stop (52) is provided at which the vane (16) abuts in one end position, the pivot axes (17) being equally spaced about a circumference of the rotor with the axis of rotation (12) as a center,
wherein the vanes (16) are forced into at least one rotational direction about the pivot axes (17), respectively, and
the vanes (16) each comprise an actuator driven upon rotation of the rotor (10) and configured to transmit the rotation of the rotor (10) to the vane (16), whereby the vane (16) is forced to pivot about the pivot axis (17),
**characterized in that**
the actuator has a cam follower (26) moving along a cam surface (24, 28) upon rotation of the rotor (10), wherein the distance of the cam surface (24, 28) to the axis of rotation (12) changes along the movement of the cam follower (26) along the cam surface (24, 28) to force the vane (16) to pivot about the pivot axis (17).

2. Device according to claim 1, wherein each vane (16) has a first said actuator at a first end of the vane in a direction parallel to the axis of rotation (12) and a second said actuator at a second end of the vane in a direction parallel to the axis of rotation (12) opposite to the first end.

3. Device according to claim 1 or 2, wherein the cam surface (24, 28) is formed by a slotted guide (22).

4. Device according to any one of the preceding claims, wherein the cam follower (26) is a rotatable wheel (27) running along the cam surface (24, 28).

5. Device according to any one of the preceding claims, wherein the cam surface (24, 28) extends continuously about the circumference of the rotor (10) with the distance between the cam surface and the axis of rotation (12) changing along the circumference.

6. Device according to any one of the preceding claims, wherein the rotor (10) rotates relative to the cam surface (24, 28).

7. Device according to any one of the preceding claims, wherein the actuator acts as a lever arm (25), one end of the lever arm being connected to the vane (60) and the opposite end being driven having the cam follower (26).

8. Device according to any one of claims 1 to 6, wherein each vane (16) further comprises a transmission (40) comprising the actuator.

9. Device according to claim 8, wherein the transmission (40) further comprises a first gear (41) mounted at one end of the vane (60) in a direction parallel to the axis of rotation (12) and coaxial to the pivot axis (17), wherein the actuator is a second gear (42) driven by the rotation of the rotor (10) having the cam follower (26) being eccentrically disposed on the second gear, wherein the rotation of the second gear (42) is transmitted to the first gear (41), preferably by the first gear meshing with the second gear.

10. Device according to any one of the preceding claims, wherein the vanes (16) are urged into the rotational direction by an elastic element (53).

## Patentansprüche

1. Vorrichtung zur Erzeugung von Elektrizität aus einem Flüssigkeitsstrom, umfassend:
einen Rotor (10), der um eine Rotationsachse (12) drehbar ist; eine Vielzahl von Flügeln (16), die sich parallel zur Rotationsachse (12) erstrecken und am Rotor für gemeinsame Rotation mit dem Rotor befestigt sind, wobei jeder Flügel (16) um eine Schwenkachse (17) parallel zur Rotationsachse (12) innerhalb eines vorbestimmten beschränkten Winkelbereich schwenkbar ist, wobei ein Anschlag (52) bereitgestellt ist, an dem der Flügel (16) in einer Endposition anliegt, wobei die Schwenkachse (17) um einen Umfang des Rotor mit der Rotationsachse (12) als Mitte gleich beabstandet ist, wobei die Flügel (16) in mindestens einer Rotationsrichtung um die jeweiligen Schwenkachse (17) gezwungen werden, und die Flügel (16) jeweils einen Aktuator umfassen, der bei Rotation des Rotors (10) angetrieben wird und der so konfiguriert ist, dass er die Rotation des Rotors (10) auf den Flügel (16) überträgt, wodurch der Flügel (16) gezwungen wird, um die Schwenkachse (17) zu schwenken, **dadurch gekennzeichnet, dass**
der Aktuator einen Nockenstößel (26) aufweist, das sich bei Rotation des Rotors (10) entlang einer Nockenoberfläche (24, 28) dreht, wobei sich der Abstand der Nockenoberfläche (24, 28) zur Rotationsachse (12) entlang der Bewegung des Nockenstößels (26) entlang der Nockenoberfläche (24, 28) ändert, um den Flügel (16) zu zwingen, um die Schwenkachse (17) zu schwenken.

2. Vorrichtung nach Anspruch 1, wobei jeder Flügel (16) einen ersten Aktuator an einem ersten Ende des Flügel in einer Richtung parallel zur Rotationsachse (12) und einen zweiten Aktuator an einem zweiten Ende des Flügels in einer Richtung parallel zur Rotationsachse (12) gegenüberliegend zum ersten Ende aufweist.

3. Vorrichtung nach Anspruch 1 oder 2, wobei die Nockenoberfläche (24, 28) durch eine Schlitzführung (22) gebildet ist.

4. Vorrichtung nach einem der vorstehenden Ansprüche, wobei der Nockenstößel (26) ein drehbares Rad (27) ist, das entlang der Nockenoberfläche (24, 28) läuft.

5. Vorrichtung nach einem der vorstehenden Ansprüche, wobei sich die Nockenoberfläche (24, 28) durchgehend um den Umfang des Rotors (10) mit dem sich entlang des Umfangs verändernden Abstand zwischen der Nockenoberfläche und der Rotationsachse (12) erstreckt.

6. Vorrichtung nach einem der vorstehenden Ansprüche, wobei der Rotor (10) in Bezug auf die Nockenoberfläche (24, 28) dreht.

7. Vorrichtung nach einem der vorstehenden Ansprüche, wobei der Aktuator als ein Hebelarm (25) fungiert, wobei eine Ende des Hebelarm mit dem Flügel (60) verbunden ist und das entgegengesetzte Ende, das angetrieben wird, den Nockenstößel (26) aufweist.

8. Vorrichtung nach einem der Ansprüche 1 bis 6, wobei jeder Flügel (16) weiter ein Getriebe (40) umfasst, das den Aktuator umfasst.

9. Vorrichtung mach Anspruch 8, wobei das Getriebe (40) weiter ein erstes Zahnrad (41) umfasst, das an einem Ende des Flügels (60) in einer Richtung parallel zur Rotationsachse (12) und koaxial zur Schwenkachse (17) montiert ist, wobei der Aktuator ein zweites Zahnrad (42) ist, das durch die Rotation des Rotors (10), der den Nockenstößel (26) aufweist, das exzentrisch auf dem zweiten Zahnrad angeordnet ist, angetrieben wird, wobei die Rotation des zweiten Zahnrads (42) auf das erste Zahnrad (41) übertragen wird, bevorzugt dadurch, dass das erste Zahnrad in das zweite Zahnrad eingreift.

10. Vorrichtung nach einem der vorstehenden Ansprüche, wobei die Flügel (16) durch ein elastisches Element (53) in die Rotationsrichtung gedrängt werden.

## Revendications

1. Dispositif pour générer de l'électricité à partir d'un écoulement de liquide, comprenant :
un rotor (10) pouvant tourner autour d'un axe de rotation (12) ;
une pluralité d'aubes (16) s'étendant parallèlement à l'axe de rotation (12) et fixées au rotor pour une rotation commune avec le rotor, chaque aube (16) pouvant pivoter autour d'un axe de pivot (17) parallèle à l'axe de rotation (12) à l'intérieur d'une plage angulaire limitée prédéterminée, dans lequel un butoir (52) est prévu au niveau duquel l'aube (16) vient en butée dans une position d'extrémité, les axes de pivot (17) étant espacés de manière égale autour d'une circonférence du rotor avec l'axe de rotation (12) en tant qu'un centre,
dans lequel les aubes (16) sont forcées dans au moins une direction de rotation autour des axes de pivot (17), respectivement, et
les aubes (16) comprennent chacune un actionneur entraîné lors d'une rotation du rotor (10) et configuré pour transmettre la rotation du rotor (10) à l'aube (16), par lequel l'aube (16) est forcée de pivoter autour de l'axe de pivot (17),
**caractérisé en ce que**
l'actionneur présente un suiveur de came (26) se déplaçant le long d'une surface de came (24, 28) lors d'une rotation du rotor (10), dans lequel la distance de la surface de came (24, 28) à l'axe de rotation (12) change le long du mouvement du suiveur de came (26) le long de la surface de came (24, 28) pour forcer l'aube (16) à pivoter autour de l'axe de pivot (17).

2. Dispositif selon la revendication 1, dans lequel chaque aube (16) présente un premier ledit actionneur à une première extrémité de l'aube dans une direction parallèle à l'axe de rotation (12) et un second ledit actionneur à une seconde extrémité de l'aube dans une direction parallèle à l'axe de rotation (12) opposée à la première extrémité.

3. Dispositif selon la revendication 1 ou la revendication 2, dans lequel la surface de came (24, 28) est formée par un guide fendu (22).

4. Dispositif selon l'une quelconque des revendications précédentes, dans lequel le suiveur de came (26) est une roue rotative (27) courant le long de la surface de came (24, 28).

5. Dispositif selon l'une quelconque des revendications précédentes, dans lequel la surface de came (24, 28) s'étend en continu autour de la circonférence du rotor (10) avec la distance entre la surface de came et l'axe de rotation (12) changeant le long de la circonférence.

6. Dispositif selon l'une quelconque des revendications précédentes, dans lequel le rotor (10) effectue un mouvement de rotation par rapport à la surface de came (24, 28).

7. Dispositif selon l'une quelconque des revendications précédentes, dans lequel l'actionneur agit en tant qu'un bras de levier (25), une extrémité du bras de levier étant raccordée à l'aube (60) et l'extrémité opposée étant entraînée présentant le suiveur de came (26).

8. Dispositif selon l'une quelconque des revendications 1 à 6, dans lequel chaque aube (16) comprend en outre une transmission (40) comprenant l'actionneur.

9. Dispositif selon la revendication 8, dans lequel la transmission (40) comprend en outre un premier engrenage (41) monté à une extrémité de l'aube (60) dans une direction parallèle à l'axe de rotation (12) et coaxiale à l'axe de pivot (17), dans lequel l'actionneur est un second engrenage (42) entraîné par la rotation du rotor (10) présentant le suiveur de came (26) excentriquement disposé sur le second engrenage, dans lequel la rotation du second engrenage (42) est transmise au premier engrenage (41), de préférence par le premier engrenage venant en prise avec le second engrenage.

10. Dispositif selon l'une quelconque des revendications précédentes, dans lequel les aubes (16) sont poussées dans la direction de rotation par un élément élastique (53).
